(19) **Europäisches Patentamt / European Patent Office / Office européen des brevets**

(11) **EP 1 768 421 A2**

(12) **EUROPEAN PATENT APPLICATION**

(43) Date of publication:
28.03.2007 Bulletin 2007/13

(51) Int Cl.:
*H04N 7/36* (2006.01)   *H04N 7/26* (2006.01)
*H04N 7/46* (2006.01)

(21) Application number: 06120767.6

(22) Date of filing: 15.09.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 27.09.2005 JP 2005279652

(71) Applicant: MATSUSHITA ELECTRIC INDUSTRIAL CO., LTD.
Osaka 571-8501 (JP)

(72) Inventors:
• BI, Mi Michael
  534415, Singapore (SG)
• AKIYAMA, Toshihide
  Osaka
  Osaka 540-6319 (JP)

(74) Representative: Eisenführ, Speiser & Partner
Patentanwälte Rechtsanwälte
Postfach 10 60 78
28060 Bremen (DE)

(54) **Motion compensation for video format down-conversion by an arbitrary ratio**

(57)   The efficient motion compensation apparatus for digital video format down-conversion with variable conversion ratio is disclosed. The apparatus is characterized by an interpolation and decimation filters derived using a number of orthogonal transforms with variable transform sizes and implemented using efficient computation architectures. The computation architecture comprises the orthogonal transform kernel selection means, frequency component computing means, coefficient weighting means and pixel reconstruction means. A simple architecture for both interpolation and decimation filtering processes has been invented. The result is the dramatic reduction of the shifting and adding/subtracting operations, making them suitable for implementation in LSI realization of the video format down-conversion of digital video systems.

*Fig.5*

**Description**

BACKGROUND OF THE INVENTION

1. Field of the Invention

The present invention relates to an apparatus for digital video format down-conversion with arbitrary conversion ration, and to a method therefor. The invention is applicable to the implementation of a digital video format down-conversion for use in digital video decoder. Typical applications of this invention include HDTV decoding, DVD decoder, video conferencing and picture-in-picture systems.

2. Description of the Related Art

Low-resolution digital video decoders have received considerably attention lately in academia and industry. In a digital video decoding system, the format down-conversion can be achieved by decimating the decoded full-resolution video sequences. Reconstructed video with good quality can be obtained by using this method. However, the decimation of decoded video sequences adds complexity to the full-resolution video decoding. In order to reduce the amount of computation, the memory size and other constrains such as memory bandwidth and clock rates incurred by this approach, image decimation has to be realized in the earlier stage of the decoder, for example, inside the decoding loop.

In European patent application EP0707426, a digital video decoder that provides format down-conversion with motion-compensation is disclosed. Motion compensation is achieved by first interpolating, then performing full-resolution motion compensation, and finally, decimation of the compensated output.

European patent application EP0786902A discusses a technique for changing image resolution using a direct discrete cosine transformation (DCT) mapping, whereby DCT coefficient values of an original resolution are mapped to converted coefficient values of a new resolution, without having to convert the original DCT coefficient values into pixels first.

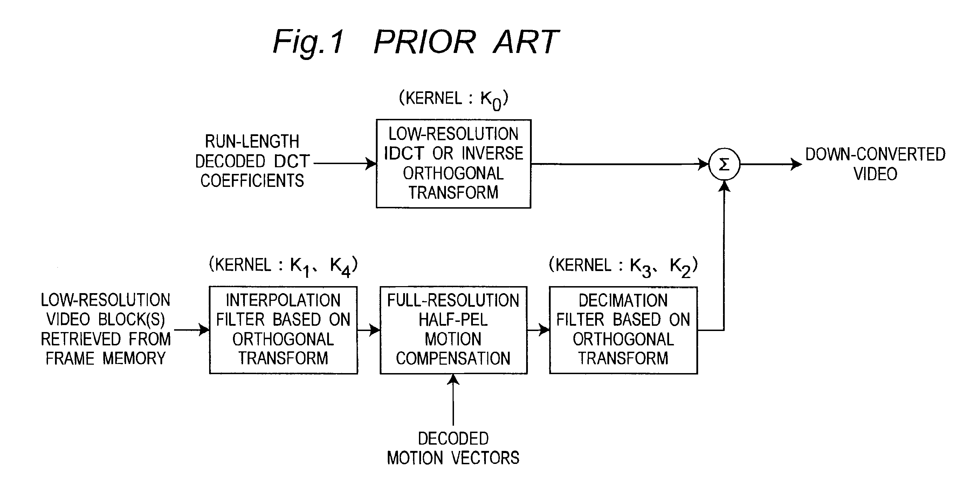

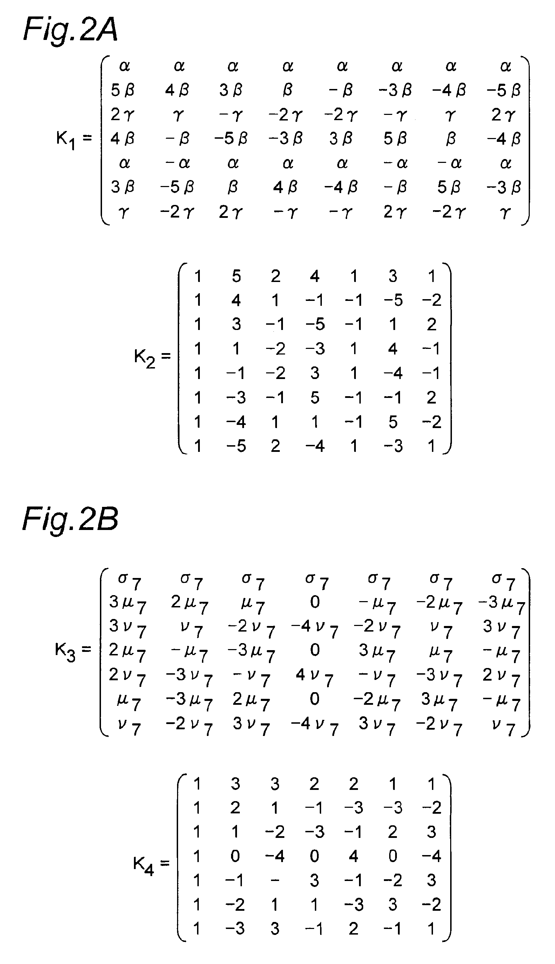

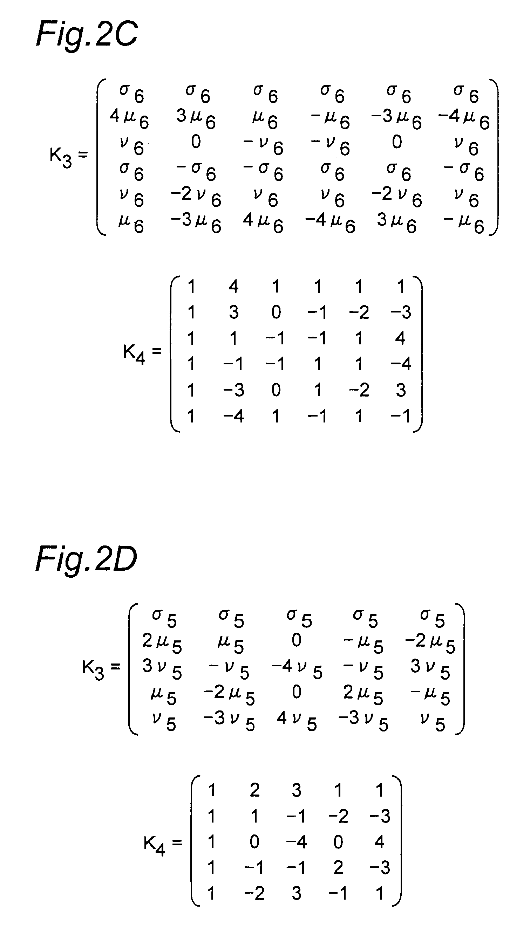

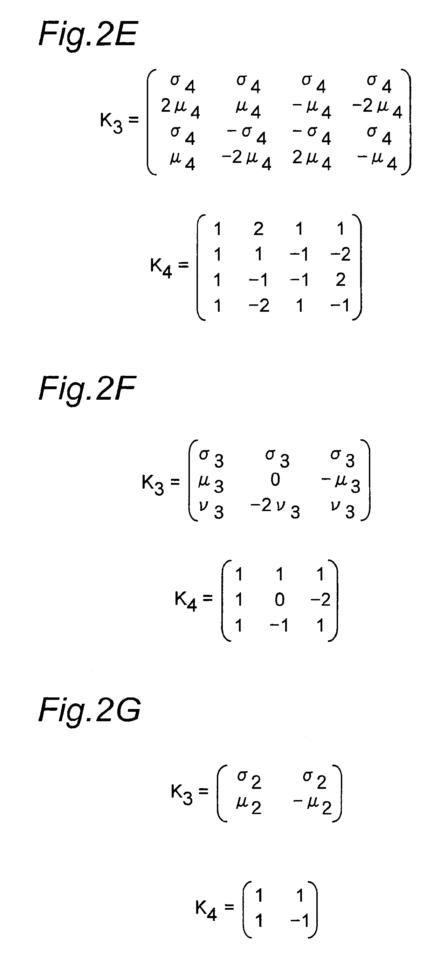

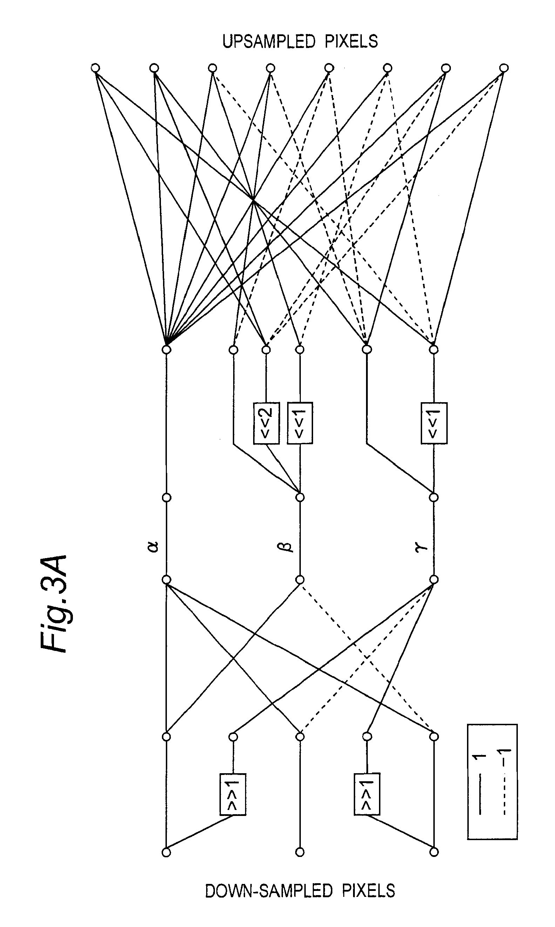

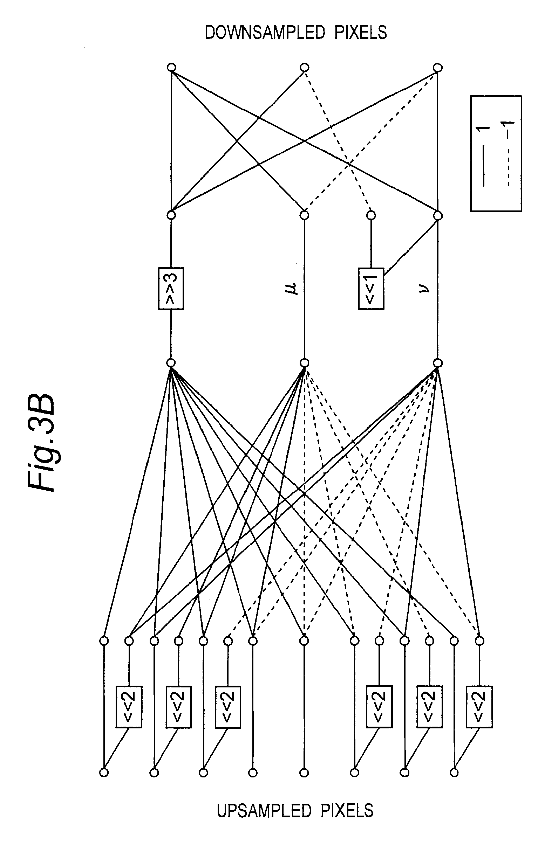

An effective method for the digital video format down-conversion has been invented and filed in Japan on June 8, 1999, entitled "A generalized orthogonal transform method for low-resolution video decoding" with application No. H11-160876, published as JP 2000-350207 and assigned to Matsushita Electric Industrial Co. Ltd. Figure 1 shows a block diagram of this video format down-conversion method. The details of the system operation and the orthogonal kernels were discussed in the above-mentioned patent application. In this architecture, the low-resolution pixels stored in the frame buffer are interpolated and decimated using orthogonal transform basis functions before and after the full-resolution motion compensation. The interpolation and decimation filters play a very important role in controlling the error propagation introduced by picture decimation of the format down-conversion system of digital video. In the format down-conversion system of digital video shown in Figure 1, these filters are realized using a number of orthogonal transform kernels. One example for the orthogonal transform kernels used for video down-conversion with the decimation ratio of 8:3 is illustrated in Figures 2A to 2G. The direct computation architecture of the interpolation and decimation filtering operations based on these kernels are shown in Figures 3A and 3B. Since the coefficients of the kernels are simple, the implementation of the system is relatively easy compared to the conventional digital video format down-conversion methods. Simulation results show that this method is also very effective in error propagation control.

The digital video format down-conversion method using orthogonal transform described in the prior art generates high quality down-converted video. The conversion ratio is however fixed in the methods described in the prior art. Due to the expansion and diversity of multimedia applications and present communication devices, especially the mobile terminals equipped with various resolution screens, there has been growing need for variable resolution digital video format down-conversion. The in-loop variable size video format down-decoding algorithms are required to efficiently decode high resolution encoded bitstreams and display the decoded down-sized pictures on various communication terminals with different resolutions. The problem to be solved by the current invention is to derive a set of interpolation and decimation filters using orthogonal transform with different transform sizes and establish efficient computation architectures for the interpolation and decimation filtering processes to achieve effective motion compensation for the digital video format down-conversion system with variable conversion ratio

SUMMARY OF THE INVENTION

US Patent, US4768159 discloses an efficient computation method for discrete Fourier transform. In order to solve the above-described problem, efficient computation architecture for implementing interpolation and decimation filters used by the digital video format down-conversion system is invented.

The original resolutions for encoded videos may differ from target resolution of video displayer with various ratios. Orthogonal kernels used for all the possible integer resolution ratios are invented. The orthogonal transform kernels are defined in the invention, and the selection of proper kernels for a particular resolution change is defined also. The computation architecture comprises three apparatus, namely frequency component computing means, coefficient weighting means and pixel reconstruction means. Less computational operations are required compared to the direct implementation of the orthogonal transform kernels described in the prior art.

The frequency component computing means is used to transform the input into frequency domain to generate the transform coefficients. The coefficient weighting means is used for receiving transform coefficients and generating weighted transform coefficients. The weighted transform coefficients are finally transformed into spatial domain to generate the filtered pixels having different resolution from the original pixels. Said decimation/interpolation parameter generator is used to determine the integer resolution conversion ratio, 8:r, select the appropriate orthogonal kernels and generate and provide decimation/interpolation parameters to said frequency component computing means, coefficient weighting means and pixel reconstruction means.

BRIEF DESCRIPTION OF THE DRAWINGS

These and other objects and features of the present invention will become clear from the following description taken in conjunction with the preferred embodiments thereof with reference to the accompanying drawings throughout which like parts are designates by like reference numerals, and in which:

Figure 1 illustrates a block diagram for low-resolution video decoder described in the prior art.
Figure 2A illustrates the kernels, $K_1$ and $K_2$, for low-resolution video decoding for down-conversion ratio of 8:7 to 8:2.
Figure 2B illustrates the kernels, $K_3$ and $K_4$, for low-resolution video decoding with the down-conversion ratio of 8:7.
Figure 2C illustrates the kernels, $K_3$ and $K_4$, for low-resolution video decoding with the down-conversion ratio of 8:6.
Figure 2D illustrates the kernels, $K_3$ and $K_4$, for low-resolution video decoding with the down-conversion ratio of 8:5.
Figure 2E illustrates the kernels, $K_3$ and $K_4$, for low-resolution video decoding with the down-conversion ratio of 8:4.
Figure 2F illustrates the kernels, $K_3$ and $K_4$, for low-resolution video decoding with the down-conversion ratio of 8:3.
Figure 2G illustrates the kernels, $K_3$ and $K_4$, for low-resolution video decoding with the down-conversion ratio of 8:2.
Figure 3A illustrates the direct computation architecture of transform kernels for 8:3 digital video down-conversion with computation architecture for interpolation filtering.
Figure 3B illustrates the direct computation architecture of transform kernels for 8:3 digital video down-conversion with computation architecture for decimation filtering.
Figure 4 illustrates a block diagram of an efficient motion compensation apparatus for low-resolution digital video format down-conversion system.
Figure 5 illustrates a block diagram for pixel interpolation and decimation filtering processes with various interpolation and decimation ratios 8:r, r=2, 3, ..., 7.
Figure 6 illustrates a block diagram of the frequency component computing means.
Figure 7 illustrates a block diagram of the coefficient weighting means.
Figure 8 illustrates a block diagram of the pixel reconstruction means.
Figure 9 illustrates a block diagram for interpolation and decimation filtering processing using cascaded arithmetic units.
Figure 10 illustrates a block diagram of the pre-processing means.
Figure 11 illustrates a block diagram of cascaded arithmetic units.
Figure 12 illustrates the transform kernel indicator (integer value r) generation.
Figure 13A illustrates the computation architectures for interpolation filter used for digital video format down-conversion with the ratio of 8:3.
Figure 13B illustrates the computation architectures for decimation filter used for digital video format down-conversion with the ratio of 8:3.

DETAILED DESCRIPTION OF THE PREFERRED EMBODIMENTS

The present invention is an apparatus for performing efficient motion compensation for digital video format down-conversion for motion compensation in digital video format down-conversion, which comprises:

a frequency component computing means having an input terminal for receiving a block of original pixels, transforming said original pixels into frequency domain and providing transform coefficients;
a coefficient weighting means for receiving said transform coefficient, multiplying each said transform coefficient by one of the pre-determined constant values to generate weighted transform coefficients;
a pixel reconstruction means having an input terminal for receiving said weighted transform coefficients and having an output terminal, for generating filtered pixels which have different resolution from said original pixels,

a decimation/interpolation parameter generator having a first input terminal for receiving original resolution (Ro), having a second input terminal for receiving target resolution (Rt) and having two output terminals, said decimation/ interpolation parameter generator for deriving a transform kernel indicator (an integer value r), by identifying the integer value r from integer set {2, 3, 4, 5, 6, 7} such that the ratio 8:r is the most close to the resolution ratio Ro:Rt, and providing said transform kernel indicator (said integer value r) and decimation/interpolation parameters through its two output terminals;

transform kernels K1 and K2 generator having an input terminal for receiving said transform kernel indicator (said integer value r) and having two output terminals, said transform kernels K1 and K2 generator for generating orthogonal transform kernels K1[r], K2[r] from pre-determined transform kernels K1 and K2. by extracting the first r rows from K1 and first r columns from K2, respectively, characterized in that the transform kernels K1 and K2 are provided in accordance with a generalized orthogonal transformation having kernels defined as follows:

$$
K_1 = \begin{pmatrix}
\alpha & \alpha & \alpha & \alpha & \alpha & \alpha & \alpha & \alpha \\
5\beta & 4\beta & 3\beta & \beta & -\beta & -3\beta & -4\beta & -5\beta \\
2\gamma & \gamma & -\gamma & -2\gamma & -2\gamma & -\gamma & \gamma & 2\gamma \\
4\beta & -\beta & -5\beta & -3\beta & 3\beta & 5\beta & \beta & -4\beta \\
\alpha & -\alpha & -\alpha & \alpha & \alpha & -\alpha & -\alpha & \alpha \\
3\beta & -5\beta & \beta & 4\beta & -4\beta & -\beta & 5\beta & -3\beta \\
\gamma & -2\gamma & 2\gamma & -\gamma & -\gamma & 2\gamma & -2\gamma & \gamma
\end{pmatrix}
$$

$$
K_2 = \begin{pmatrix}
1 & 5 & 2 & 4 & 1 & 3 & 1 \\
1 & 4 & 1 & -1 & -1 & -5 & -2 \\
1 & 3 & -1 & -5 & -1 & 1 & 2 \\
1 & 1 & -2 & -3 & 1 & 4 & -1 \\
1 & -1 & -2 & 3 & 1 & -4 & -1 \\
1 & -3 & -1 & 5 & -1 & -1 & 2 \\
1 & -4 & 1 & 1 & -1 & 5 & -2 \\
1 & -5 & 2 & -4 & 1 & -3 & 1
\end{pmatrix}
$$

transform kernels K3 and K4 generator having an input terminal for receiving said transform kernel indicator (said integer value r) and having two output terminals, said transform kernels K3 and K4 generator for selecting orthogonal transform kernels K3[r] and K4[r] from a pool of pre-determined transform kernels K3 and K4 candidates, by choosing the transform kernels defined for resolution ratio 8:r from the pre-determined candidate kernels, characterized in that the transform kernels K3[r] and K4[r] candidates are provided in accordance with a generalized orthogonal transformation having kernels defined as follows:

r = 7

$$K_3[7] = \begin{pmatrix} \sigma_7 & \sigma_7 & \sigma_7 & \sigma_7 & \sigma_7 & \sigma_7 & \sigma_7 \\ 3\mu_7 & 2\mu_7 & \mu_7 & 0 & -\mu_7 & -2\mu_7 & -3\mu_7 \\ 3v_7 & v_7 & -2v_7 & -4v_7 & -2v_7 & v_7 & 3v_7 \\ 2\mu_7 & -\mu_7 & -3\mu_7 & 0 & 3\mu_7 & \mu_7 & -\mu_7 \\ 2v_7 & -3v_7 & -v_7 & 4v_7 & -v_7 & -3v_7 & 2v_7 \\ \mu_7 & -3\mu_7 & 2\mu_7 & 0 & -2\mu_7 & 3\mu_7 & -\mu_7 \\ v_7 & -2v_7 & 3v_7 & -4v_7 & 3v_7 & -2v_7 & v_7 \end{pmatrix}$$

$$K_4[7] = \begin{pmatrix} 1 & 3 & 3 & 2 & 2 & 1 & 1 \\ 1 & 2 & 1 & -1 & -3 & -3 & -2 \\ 1 & 1 & -2 & -3 & -1 & 2 & 3 \\ 1 & 0 & -4 & 0 & 4 & 0 & -4 \\ 1 & -1 & - & 3 & -1 & -2 & 3 \\ 1 & -2 & 1 & 1 & -3 & 3 & -2 \\ 1 & -3 & 3 & -1 & 2 & -1 & 1 \end{pmatrix}$$

<u>r = 6</u>

$$K_3[6] = \begin{pmatrix} \sigma_6 & \sigma_6 & \sigma_6 & \sigma_6 & \sigma_6 & \sigma_6 \\ 4\mu_6 & 3\mu_6 & \mu_6 & -\mu_6 & -3\mu_6 & -4\mu_6 \\ v_6 & 0 & -v_6 & -v_6 & 0 & v_6 \\ \sigma_6 & -\sigma_6 & -\sigma_6 & \sigma_6 & \sigma_6 & -\sigma_6 \\ v_6 & -2v_6 & v_6 & v_6 & -2v_6 & v_6 \\ \mu_6 & -3\mu_6 & 4\mu_6 & -4\mu_6 & 3\mu_6 & -\mu_6 \end{pmatrix}$$

$$K_4[6] = \begin{pmatrix} 1 & 4 & 1 & 1 & 1 & 1 \\ 1 & 3 & 0 & -1 & -2 & -3 \\ 1 & 1 & -1 & -1 & 1 & 4 \\ 1 & -1 & -1 & 1 & 1 & -4 \\ 1 & -3 & 0 & 1 & -2 & 3 \\ 1 & -4 & 1 & -1 & 1 & -1 \end{pmatrix}$$

r = 5

$$K_3[5] = \begin{pmatrix} \sigma_5 & \sigma_5 & \sigma_5 & \sigma_5 & \sigma_5 \\ 2\mu_5 & \mu_5 & 0 & -\mu_5 & -2\mu_5 \\ 3\nu_5 & -\nu_5 & -4\nu_5 & -\nu_5 & 3\nu_5 \\ \mu_5 & -2\mu_5 & 0 & 2\mu_5 & -\mu_5 \\ \nu_5 & -3\nu_5 & 4\nu_5 & -3\nu_5 & \nu_5 \end{pmatrix}$$

$$K_4[5] = \begin{pmatrix} 1 & 2 & 3 & 1 & 1 \\ 1 & 1 & -1 & -2 & -3 \\ 1 & 0 & -4 & 0 & 4 \\ 1 & -1 & -1 & 2 & -3 \\ 1 & -2 & 3 & -1 & 1 \end{pmatrix}$$

r = 4

$$K_3[4] = \begin{pmatrix} \sigma_4 & \sigma_4 & \sigma_4 & \sigma_4 \\ 2\mu_4 & \mu_4 & -\mu_4 & -2\mu_4 \\ \sigma_4 & -\sigma_4 & -\sigma_4 & \sigma_4 \\ \mu_4 & -2\mu_4 & 2\mu_4 & -\mu_4 \end{pmatrix}$$

$$K_4[4] = \begin{pmatrix} 1 & 2 & 1 & 1 \\ 1 & 1 & -1 & -2 \\ 1 & -1 & -1 & 2 \\ 1 & -2 & 1 & -1 \end{pmatrix}$$

r = 3

$$K_3[3] = \begin{pmatrix} \sigma_3 & \sigma_3 & \sigma_3 \\ \mu_3 & 0 & -\mu_3 \\ \nu_3 & -2\nu_3 & \nu_3 \end{pmatrix}$$

$$K_4[3] = \begin{pmatrix} 1 & 1 & 1 \\ 1 & 0 & -2 \\ 1 & -1 & 1 \end{pmatrix}$$

<u>r = 2</u>

$$K_3[2] = \begin{pmatrix} \sigma_2 & \sigma_2 \\ \mu_2 & -\mu_2 \end{pmatrix}$$

$$K_4[2] = \begin{pmatrix} 1 & 1 \\ 1 & -1 \end{pmatrix}$$

The operation of the apparatus of the invention is explained.

First the operation of the computation architecture for the interpolation and decimation filtering processes is explained. The decimation/interpolation parameter generator receives the original resolution of decoded video, Ro, and target resolution of video displayer, Rt. The integer resolution conversion ratio r (8:r) is derived by identifying the integer value r from integer set {2, 3, 4, 5, 6, 7} such that the ratio 8:r is the most close to the resolution ratio Ro:Rt. The orthogonal transform kernels (K1[r], K2[r], K3[r] and K4[r]) are retrieved from a pool of pre-determined orthogonal transform kernels. The decimation/interpolation parameters are then generated and provided to the frequency component computing means, the coefficient weighting means and pixel reconstruction means. The original pixels are transformed into frequency domain by said frequency component computing means to generate the transform coefficients. Said transform coefficients are multiplied by a set of pre-determined constants by said coefficient weighting means to generate the weighted transform coefficients. The weighted transform coefficients are transformed from frequency domain into spatial domain by said pixel reconstruction means to provide filtered pixels which have different resolution from said original pixels.

Next, the operations of the frequency component computing means are explained. A reversed sequence of a block of the original pixels is generated in upper or lower address reversed order. A pair of selected pixel sequences is selected from said pixel sequence, the reversed sequence, the transform coefficients and the bit-shifted coefficient sequence by a pixel selecting means. An operation indication sequence is generated by the pixel selecting means to indicate the adding or subtracting operation. The sum or difference of said pair of selected pixel sequences is computed based on said operation indication sequence to generate said transform coefficients. Each transform coefficient is shifted by one or more bits to generate said bit-shifted coefficient sequence.

The frequency component computing means can also be operated using another method described here. The data address reversing means provides a reversed data set of a block of said original pixels in upper or lower address reversed order. A data selecting means receives said original pixels and said reversed data set to provide an operation indication set and two selected data sets. The calculator computes sum or difference of each pair of said selected data to generate processed data. One or more cascaded arithmetic units receives said processed data, manipulates them algebraically to provide said transform coefficients.

The operations of the coefficient weighting means are explained. Each transform coefficient is multiplied by one of said pre-determined constant values stored in said coefficient memory. The output of said multiplying means or said transform coefficients are switched based on a coefficient bypass control signal to provide said weighted transform coefficients. Said coefficient bypass control signal is determined based on the transform kernels used for the format down-conversion system of digital video.

The operations of said pixel reconstruction means are explained. The weighted transform coefficients are shifted by one or more bits to generate said bit-shifted vector. A pair of selected coefficient vectors is selected from said coefficient vector, said bit-shifted vector, filtered pixels and reversed pixel vector by a coefficient selecting means. An operation indication vector is generated by said coefficient selecting means to indicate the adding or subtracting operation. The sum or difference of said pair of coefficient samples is computed based on said operation indication vector to generate said filtered pixels. The reversed pixel vector of a block of filtered coefficients is generated by an address reversing means in upper or lower address reversed order.

The pixel reconstruction means can also be realized using one or more cascaded arithmetic units. The operations of the arithmetic units used for said frequency component computation means and pixel reconstruction means are now explained. The shifter shifts the input data by one or more bits to generate bit-shifted data set. The data selector receives said input data and said bit-shifted data set to provide an operation indication set and two selected data sets. A calculator adds or subtracts two selected data sets based on said operation indication.

The input terminal of the frequency component computing means can be coupled to the output terminal of the frame buffer, and the output terminal of the pixel reconstruction means can provide the interpolated pixels to the motion compensation means.

The input terminal of the frequency component computing means can be coupled to the output terminal of the motion compensation means, and the output terminal of the pixel reconstruction means can provide the decimated pixels to the adding means.

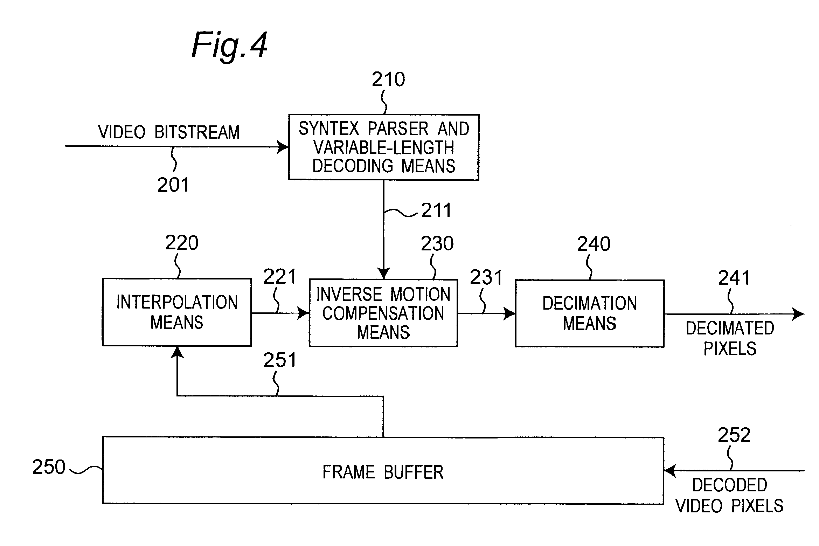

An embodiment shown in Figure 4 illustrates the block diagram of an efficient motion compensation system for digital video format down-conversion The system comprises an syntax parser and variable-length decoding means 210, an interpolation means 220, an inverse motion compensation means 230, a decimation means 240 and a frame buffer 250. The interpolation means 220 and the decimation means 240 are used before and after the inverse motion compensation means 230.

The video bitstream 201 is first decoded by the syntax parser and variable-length decoding means 210 to obtain the decoded motion parameters 211. The frame buffer 250 stores low-resolution video pictures. The low-resolution reference pixels 251 are retrieved from the frame buffer 250 by the interpolation means 220 and interpolated to generate the interpolated pixels 221 for inverse motion compensation means 230. The inverse motion compensation means 230 performs motion compensation based on the interpolated pixels 221 and the decoded motion parameters 211 to obtain the motion-compensated pixels 231. The motion-compensated pixels 231 are then decimated by the decimation means 240 to generate decimated pixels 241.

The effect of this embodiment is that the accuracy of inverse motion compensation for down-converted video can be improved by introducing the interpolation and decimation means. Since the format down-conversion processing of each video frame introduces error, it is extremely important to control the propagation of decoding errors. The properly designed interpolation and decimation means are efficient error control engines for minimizing the error of each decoded frame.

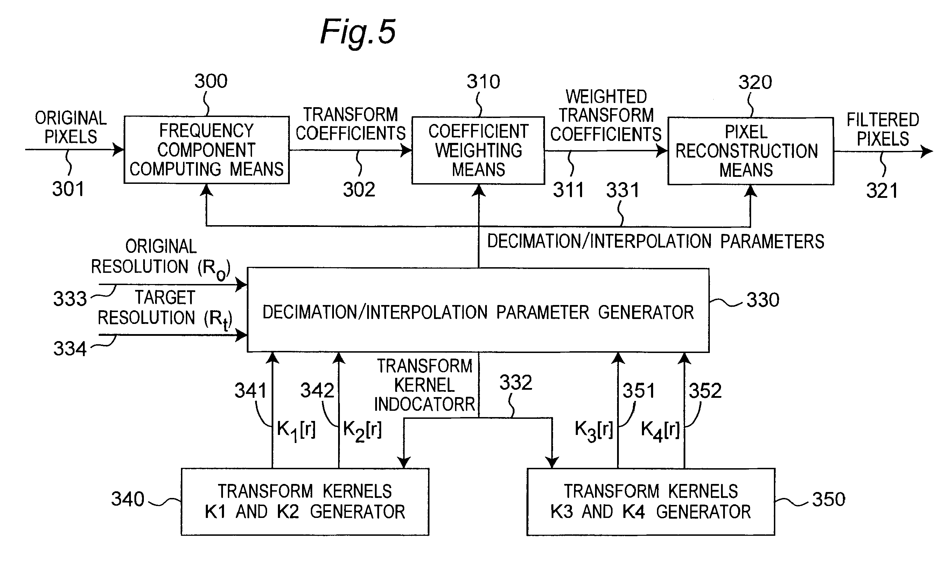

Another embodiment shown in Figure 5 explains the method used in the interpolation and decimation means illustrated in Figure 4. It comprises six components, namely, frequency component computing means 300 coefficient weighting means 310, pixel reconstruction means 320, decimation/interpolation parameter generator 330, transform kernel K1 and K2 340, transform kernels K3 and K4 candidates 350.

The operation of this embodiment is now explained. The operation of said computation architecture for the interpolation and decimation filtering processes is now explained. The decimation/interpolation parameter generator 330 receives the original resolution of decoded video 333, Ro, and target resolution of video displayer 334, Rt. The integer resolution conversion ratio 332 r (8:r) is derived by identifying the integer value r 332 from integer set {2, 3, 4, 5, 6, 7} such that the ratio 8:r is the most close to the resolution ratio Ro:Rt. The orthogonal transform kernels (K1[r], K2[r], K3[r] and K4[r]) are retrieved from pre-determined transform kernels K1 and K2 340 and a pool of pre-determined transform kernels K3 and K4 candidates 350. K1[r] and K2[r] are derived from transform kernels K1 and K2, defined in Figure 2A, by extracting the first r rows from K1 and first r columns from K2. The K3[r] and K4[r] are generated by choosing the transform kernels defined for resolution ratio 8:r from the candidate kernels defined in Figure 2B through Figure 2G. The decimation/interpolation parameters 331 are then generated and provided to the frequency component computing means 300, the coefficient weighting means 310 and pixel reconstruction means 320. The original pixels 301 retrieved from the frame buffer 250 are transformed into transform coefficients 302 by frequency component computing means 300. The transform coefficients 302 are multiplied by the pre-determined values to generate weighted transform coefficients 311 using the coefficient weighting means 310. The weighted transform coefficients 311 are transformed, by the pixel reconstruction means 320, into spatial domain to generate the filtered pixels 321 having different resolution from the original pixels 301.

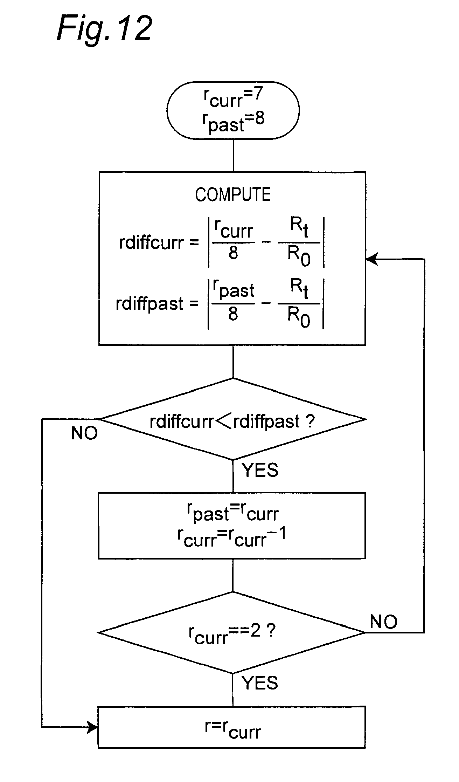

Another embodiment shown in Figure 12 explains the generation of transform kernel indicator mentioned in the embodiment in Figure 5. At first, the values $r_{cuur}$ and $r_{past}$ are set to be 7 and 8, respectively. The values *rdiffcurr* and *rdiffpast* are then computed by $rdiffcurr = \left| \dfrac{r_{curr}}{8} - \dfrac{R_t}{R_o} \right|$ and $rdiffpast = \left| \dfrac{r_{past}}{8} - \dfrac{R_t}{R_o} \right|$, respectively. If *rdiffcurr* is smaller than *rdiffpast*, $r_{past}$ and $r_{cuur}$ will be assigned to $r_{past} = r_{cuur}$ and $r_{cuur} = r_{cuur}$ - 1, Otherwise, $r_{curr}$ will be outputted as the transform kernel indicator. After assignment of $r_{past} = r_{cuur}$ and $r_{cuur} = r_{cuur} - 1$ are completed, the value of $r_{cuur}$ is examined. If $r_{cuur}$ is 2, the $r_{curr}$ will be outputted as the transform kernel indicator, otherwise, the *rdiffcurr* and *rdiffpast* will be re-calculated by using updated $r_{cuur}$ and $r_{past}$. The above process will be repeated until the transform kernel indicator (an integer value r) is obtained and outputted.

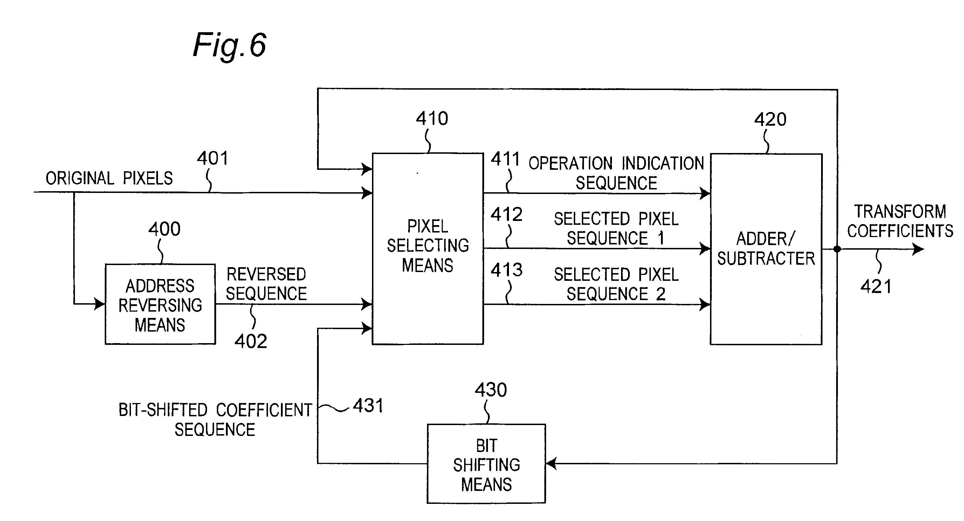

Another embodiment shown in Figure 6 explains the realization of the frequency component computing means 300 illustrated in Figure 5. This apparatus comprises an address reversing means 400, a pixel selecting means 410, an adder/subtracter 420 and a bit shifting means 430

The operation of this embodiment is now explained. The reversed sequence 402 of a block of the original pixels 401 is generated in upper/lower address reversed order by the address reversing means 400. A pair of selected pixel sequences 412, 413 is selected from the original pixels 401, reversed sequence 402, transform coefficients 421 and bit-shifted coefficient sequence 431 by a pixel selecting means 410. An operation indication sequence 411 is also generated by the pixel selecting means 410 to indicate the adding or subtracting operation. The sum or difference of the pair of selected pixel sequences 412, 413 is computed based on the operation indication sequence 411 to generate the transform coefficients 421. Each transform coefficient 421 is shifted by one or more bits by the bit shifting means 430 to generate the bit-shifted coefficient sequence 431.

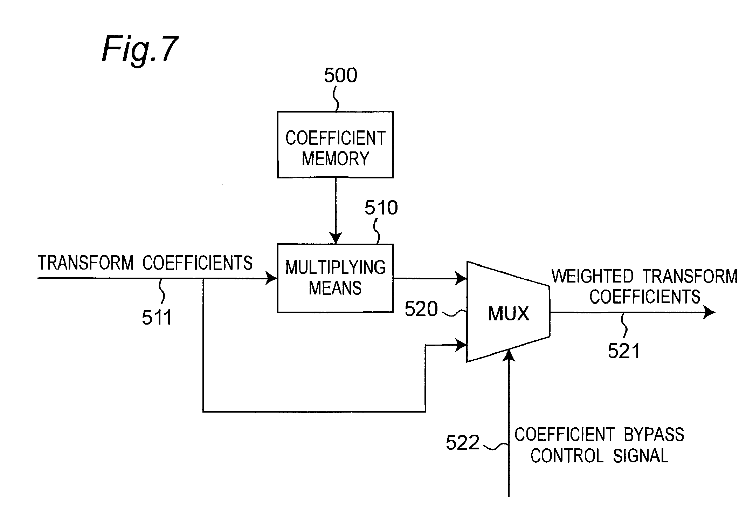

Another embodiment shown in Figure 7 explains the details of the coefficient weighting means 310 shown in Figure 5. This apparatus comprises a coefficient memory 500, a multiplying means 510 and a multiplexer 520.

The operation of this embodiment is now explained. Each transform coefficient 511 is multiplied by one of the pre-determined constant values stored in the coefficient memory 500. The output of multiplying means 510 and the transform coefficients 511 are multiplexed based on a coefficient bypass control signal 522 to provide the weighted transform coefficients 521. The coefficient bypass control signal is determined based on the transform kernels used for the format down-conversion system of digital video.

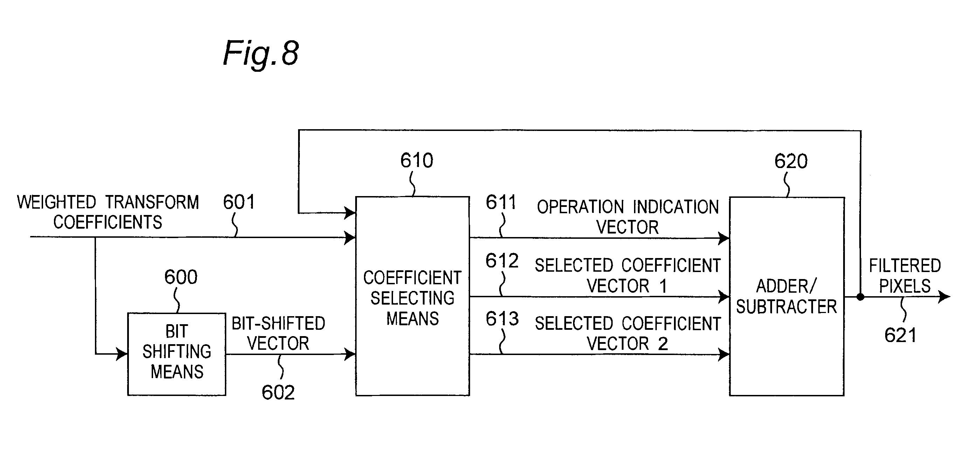

Another embodiment shown in Figure 8 explains the details of the pixel reconstruction means 320 shown in Figure 5. This apparatus comprises a bit shifting means 600, a coefficient selecting means 610 and an adder/subtracter 620.

The operation of this embodiment is now explained. The weighted transform coefficients 601 are shifted by one or more bits, by the bit shifting means 600 to generate the bit-shifted vector 602. A pair of selected coefficient vectors 612, 613 is selected from the weighted transform coefficients 601, bit-shifted vector 602 and filtered pixels 621 by the signal selecting means 610. An operation indication vector 611 is also generated by the coefficient selecting means 610 to indicate the adding or subtracting operation. The sum or difference of the selected coefficient vectors 612, 613 is computed based on the operation indication vector 611 to generate the filtered pixels 621.

The immediate effect of the embodiments shown in Figure 5 through Figure 8 is that an image interpolation and decimation apparatus can be realized using efficient computation architecture derived according to the properties of generalized orthogonal transforms. Same apparatus can be used for both interpolation and decimation filtering processes derived based on orthogonal transforms. The intermediate computation results are fed back to a signal selecting means for further processing using same circuit. Thus, another effect of the embodiment shown in Figure 5 through Figure 8 is that it is possible to reduce the scale of the circuits required for format down-conversion system of digital video.

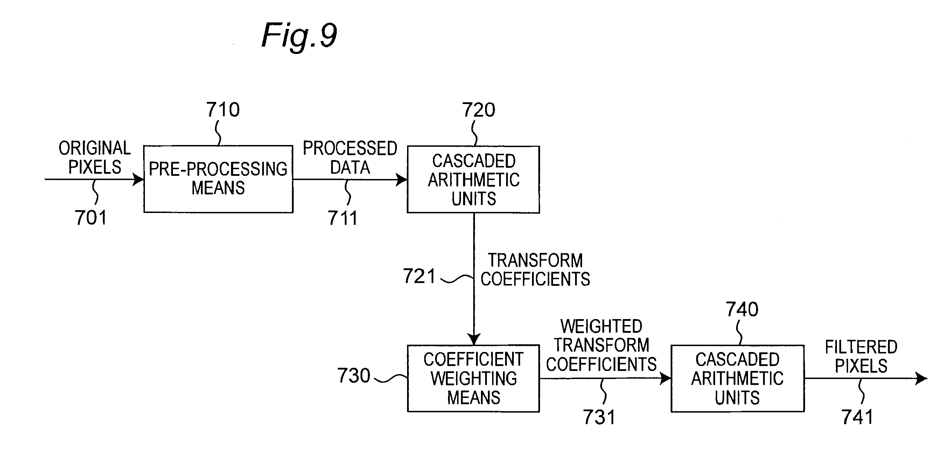

The embodiment shown in Figure 9 explains another apparatus for implementation of the interpolation and decimation filtering processes. This apparatus comprises a pre-processing means 710, two sets of cascaded arithmetic units 720, 740 and coefficient weighting means 730.

The operation of this embodiment is now explained. The original pixels 701 are processed by the pre-processing means 710 to generate processed data 711. The processed data 711 is further processed by one set of cascaded arithmetic units 720 to generate the transform coefficients 721 which is the same as the transform coefficients 302 shown in Figure 5. The coefficient weighting means 730 performs the same operation described in the embodiment shown in Figure 5 on the transform coefficients 721 and provides the weighted transform coefficients 731. Another set of cascaded arithmetic units receives the weighted transform coefficients 73 1 and processes them to generate the filtered pixel 741.

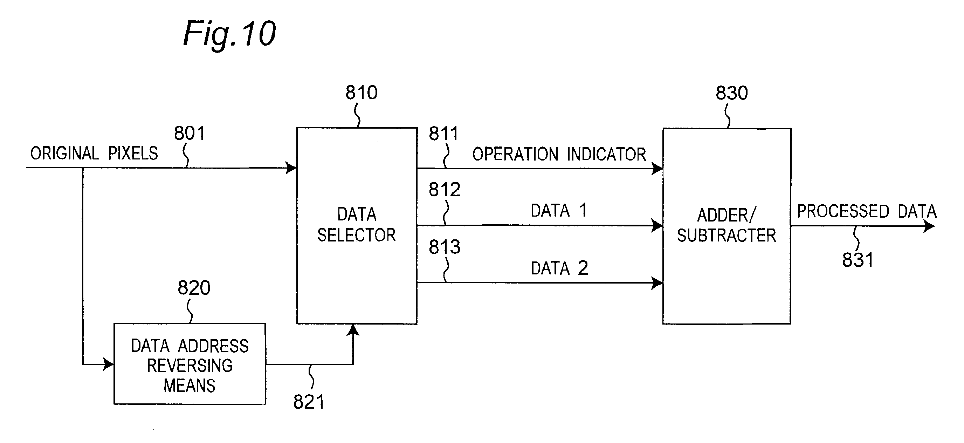

The embodiment shown in Figure 10 explains the details of the pre-processing means used in the embodiment illustrated in Figure 9. It comprises a data selector 810, a data address reversing means 820 and an adder/subtracter 830.

The operation of this embodiment is now explained. The reversed data set 821 of a block of original pixels 801 is generated in upper/lower address reversed order by the data address reversing means 820. The data selector 810 chooses a pair of data 812, 813, from the original pixels 801 and the reversed data set 821, and generates an operation indicator 811. The operation indicator 811 is a binary data with one value indicating adding operation and another value indicating subtracting operation. The adder/subtracter 830 computes the sum/difference of the selected pair of data 812, 813 based on the operation indicator 811 to generate the processed data 831.

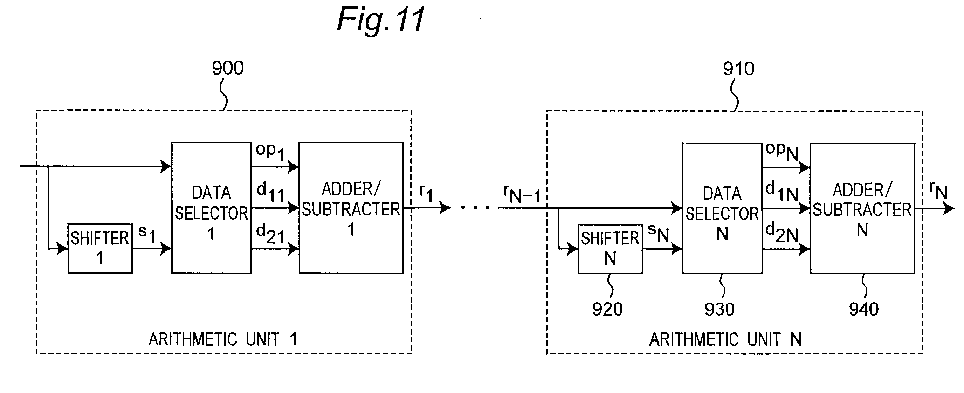

Another embodiment shown in Figure 11 explains the details of the cascaded arithmetic units. Arithmetic unit 1 900 through arithmetic unit N 910, $N \geq 1$, are connected with each other in a cascaded way. The Nth arithmetic unit 910 comprises a shifter 920a data selector 930 and an adder/subtracter 940

The operation of the $n$th ($n \geq 1$) arithmetic unit 910 is now explained. The input $r_{n-1}$, which is the output of the ($n$-1)th arithmetic unit (or the output of the pre-processing means 710 if $n$=1), is shifted by one or more bits by a shifter 920 to generate the bit-shifted data $s_n$. The data selector 930 chooses a pair of data $(d_{1n}$ and $d_{2n})$, from $r_{n-1}$ and $s_n$, and an operation indicator $(op_n)$. The operation indicator $(op_n)$ is a binary data with one value indicating adding operation and another indicating subtracting operation. The adder/subtracter 940 computes the sum/difference of $d_{1n}$ and $d_{2n}$ based on the value of $op_n$ to generate the output $r_n$ of the nth arithmetic unit 910.

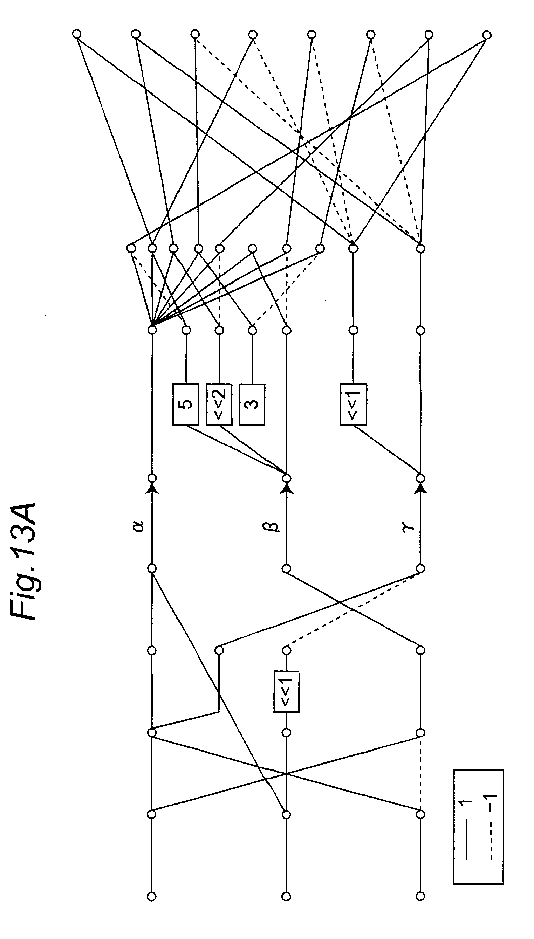

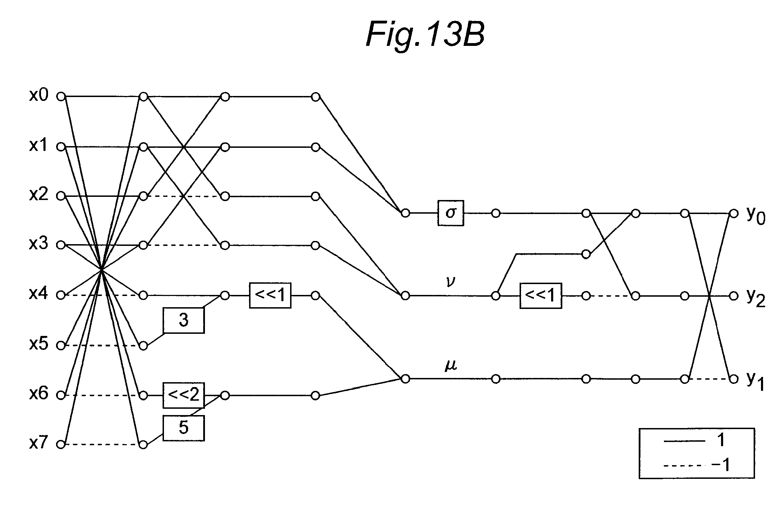

The effect of the embodiments shown in Figure 9 through Figure 11 is that it provides an alternative way to implement the interpolation and decimation filtering processing. Similar to the embodiments shown in Figure 5 through Figure 8, same architecture can be used for both interpolation and decimation filtering processing derived based on orthogonal transforms. However, there is no feedback loop in each embodiment. Thus, the latency introduced by the interpolation and decimation circuits can be minimized at the cost of more hardware requirements. A computation architecture, which is built based on the apparatus described in the embodiments shown in Figure 9 through Figure 11, for the purpose of video format down-conversion using the orthogonal transform kernels presented in Figures 2A and 2F of this patent specification are illustrated in Figures 13A and 13B, respectively.

This invention produces high-quality video format down-conversion solution. The computational requirement of the invention is much less intensive than that required for the conventional low-resolution video decoding methods or the direct implementation of the digital video format down-conversion method mentioned in the prior art. The apparatus designed for interpolation filter and decimation filter are of the same architecture. The number of shifting and adding operations required by the interpolation and decimation can be reduced by 46% and 21%, respectively, for the video format down-conversion at the down-conversion ratio of 8:3.

**Claims**

1. An apparatus for performing efficient motion compensation for digital video format down-conversion for motion compensation in digital video format down-conversion, comprising:

   a frequency component computing means having an input terminal for receiving a block of original pixels, transforming said original pixels into frequency domain and providing transform coefficients;
   a coefficient weighting means for receiving said transform coefficient, multiplying each said transform coefficient by one of the pre-determined constant values to generate weighted transform coefficients;
   a pixel reconstruction means having an input terminal for receiving said weighted transform coefficients and having an output terminal, for generating filtered pixels which have different resolution from said original pixels,
   a decimation/interpolation parameter generator having a first input terminal for receiving original resolution (Ro), having a second input terminal for receiving target resolution (Rt) and having two output terminals, said decimation/interpolation parameter generator for deriving a transform kernel indicator (an integer value r), by identifying the integer value r from integer set {2, 3, 4, 5, 6, 7} such that the ratio 8:r is the most close to the resolution ratio Ro:Rt, and providing said transform kernel indicator (said integer value r) and decimation/interpolation parameters through its two output terminals;
   transform kernels K1 and K2 generator having an input terminal for receiving said transform kernel indicator (said integer value r) and having two output terminals, said transform kernels K1 and K2 generator for generating orthogonal transform kernels K1[r], K2[r] from pre-determined transform kernels K1 and K2. by extracting the first r rows from K1 and first r columns from K2, respectively, **characterized in that** the transform kernels K1 and K2 are provided in accordance with a generalized orthogonal transformation having kernels defined as follows:

$$K_1 = \begin{pmatrix} \alpha & \alpha & \alpha & \alpha & \alpha & \alpha & \alpha & \alpha \\ 5\beta & 4\beta & 3\beta & \beta & -\beta & -3\beta & -4\beta & -5\beta \\ 2\gamma & \gamma & -\gamma & -2\gamma & -2\gamma & -\gamma & \gamma & 2\gamma \\ 4\beta & -\beta & -5\beta & -3\beta & 3\beta & 5\beta & \beta & -4\beta \\ \alpha & -\alpha & -\alpha & \alpha & \alpha & -\alpha & -\alpha & \alpha \\ 3\beta & -5\beta & \beta & 4\beta & -4\beta & -\beta & 5\beta & -3\beta \\ \gamma & -2\gamma & 2\gamma & -\gamma & -\gamma & 2\gamma & -2\gamma & \gamma \end{pmatrix}$$

$$K_2 = \begin{pmatrix} 1 & 5 & 2 & 4 & 1 & 3 & 1 \\ 1 & 4 & 1 & -1 & -1 & -5 & -2 \\ 1 & 3 & -1 & -5 & -1 & 1 & 2 \\ 1 & 1 & -2 & -3 & 1 & 4 & -1 \\ 1 & -1 & -2 & 3 & 1 & -4 & -1 \\ 1 & -3 & -1 & 5 & -1 & -1 & 2 \\ 1 & -4 & 1 & 1 & -1 & 5 & -2 \\ 1 & -5 & 2 & -4 & 1 & -3 & 1 \end{pmatrix}$$

transform kernels K3 and K4 generator having an input terminal for receiving said transform kernel indicator (said integer value r) and having two output terminals, said transform kernels K3 and K4 generator for selecting orthogonal transform kernels K3[r] and K4[r] from a pool of pre-determined transform kernels K3 and K4 candidates, by choosing the transform kernels defined for resolution ratio 8:r from the pre-determined candidate kernels, **characterized in that** the transform kernels K3[r] and K4[r] candidates are provided in accordance with a generalized orthogonal transformation having kernels defined as follows:
r = 7

$$K_3[7] = \begin{pmatrix} \sigma_7 & \sigma_7 & \sigma_7 & \sigma_7 & \sigma_7 & \sigma_7 & \sigma_7 \\ 3\mu_7 & 2\mu_7 & \mu_7 & 0 & -\mu_7 & -2\mu_7 & -3\mu_7 \\ 3\nu_7 & \nu_7 & -2\nu_7 & -4\nu_7 & -2\nu_7 & \nu_7 & 3\nu_7 \\ 2\mu_7 & -\mu_7 & -3\mu_7 & 0 & 3\mu_7 & \mu_7 & -\mu_7 \\ 2\nu_7 & -3\nu_7 & -\nu_7 & 4\nu_7 & -\nu_7 & -3\nu_7 & 2\nu_7 \\ \mu_7 & -3\mu_7 & 2\mu_7 & 0 & -2\mu_7 & 3\mu_7 & -\mu_7 \\ \nu_7 & -2\nu_7 & 3\nu_7 & -4\nu_7 & 3\nu_7 & -2\nu_7 & \nu_7 \end{pmatrix}$$

$$K_4[7] = \begin{pmatrix} 1 & 3 & 3 & 2 & 2 & 1 & 1 \\ 1 & 2 & 1 & -1 & -3 & -3 & -2 \\ 1 & 1 & -2 & -3 & -1 & 2 & 3 \\ 1 & 0 & -4 & 0 & 4 & 0 & -4 \\ 1 & -1 & - & 3 & -1 & -2 & 3 \\ 1 & -2 & 1 & 1 & -3 & 3 & -2 \\ 1 & -3 & 3 & -1 & 2 & -1 & 1 \end{pmatrix}$$

r = 6

$$K_3[6] = \begin{pmatrix} \sigma_6 & \sigma_6 & \sigma_6 & \sigma_6 & \sigma_6 & \sigma_6 \\ 4\mu_6 & 3\mu_6 & \mu_6 & -\mu_6 & -3\mu_6 & -4\mu_6 \\ v_6 & 0 & -v_6 & -v_6 & 0 & v_6 \\ \sigma_6 & -\sigma_6 & -\sigma_6 & \sigma_6 & \sigma_6 & -\sigma_6 \\ v_6 & -2v_6 & v_6 & v_6 & -2v_6 & v_6 \\ \mu_6 & -3\mu_6 & 4\mu_6 & -4\mu_6 & 3\mu_6 & -\mu_6 \end{pmatrix}$$

$$K_4[6] = \begin{pmatrix} 1 & 4 & 1 & 1 & 1 & 1 \\ 1 & 3 & 0 & -1 & -2 & -3 \\ 1 & 1 & -1 & -1 & 1 & 4 \\ 1 & -1 & -1 & 1 & 1 & -4 \\ 1 & -3 & 0 & 1 & -2 & 3 \\ 1 & -4 & 1 & -1 & 1 & -1 \end{pmatrix}$$

r = 5

$$K_3[5] = \begin{pmatrix} \sigma_5 & \sigma_5 & \sigma_5 & \sigma_5 & \sigma_5 \\ 2\mu_5 & \mu_5 & 0 & -\mu_5 & -2\mu_5 \\ 3v_5 & -v_5 & -4v_5 & -v_5 & 3v_5 \\ \mu_5 & -2\mu_5 & 0 & 2\mu_5 & -\mu_5 \\ v_5 & -3v_5 & 4v_5 & -3v_5 & v_5 \end{pmatrix}$$

$$K_4[5] = \begin{pmatrix} 1 & 2 & 3 & 1 & 1 \\ 1 & 1 & -1 & -2 & -3 \\ 1 & 0 & -4 & 0 & 4 \\ 1 & -1 & -1 & 2 & -3 \\ 1 & -2 & 3 & -1 & 1 \end{pmatrix}$$

r = 4

$$K_3[4] = \begin{pmatrix} \sigma_4 & \sigma_4 & \sigma_4 & \sigma_4 \\ 2\mu_4 & \mu_4 & -\mu_4 & -2\mu_4 \\ \sigma_4 & -\sigma_4 & -\sigma_4 & \sigma_4 \\ \mu_4 & -2\mu_4 & 2\mu_4 & -\mu_4 \end{pmatrix}$$

$$K_4[4] = \begin{pmatrix} 1 & 2 & 1 & 1 \\ 1 & 1 & -1 & -2 \\ 1 & -1 & -1 & 2 \\ 1 & -2 & 1 & -1 \end{pmatrix}$$

r = 3

$$K_3[3] = \begin{pmatrix} \sigma_3 & \sigma_3 & \sigma_3 \\ \mu_3 & 0 & -\mu_3 \\ \nu_3 & -2\nu_3 & \nu_3 \end{pmatrix}$$

$$K_4[3] = \begin{pmatrix} 1 & 1 & 1 \\ 1 & 0 & -2 \\ 1 & -1 & 1 \end{pmatrix}$$

r = 2

$$K_3[2] = \begin{pmatrix} \sigma_2 & \sigma_2 \\ \mu_2 & -\mu_2 \end{pmatrix}$$

$$K_4[2] = \begin{pmatrix} 1 & 1 \\ 1 & -1 \end{pmatrix}$$

2. The apparatus according to claim 1 wherein said orthogonal transform kernels K1[r], K2[r] are generated by extracting the first r rows from said K1 and first r columns from said K2.

3. The apparatus according to claim 1 wherein said input terminal of said frequency component computing means is coupled to said output terminal of said frame buffer, and said output terminal of said pixel reconstruction means provides said interpolated pixels to said motion compensation means.

4. The apparatus according to claim 1 wherein said input terminal of said frequency component computing means is coupled to an output terminal of an inverse motion compensation means, and said output terminal of said pixel reconstruction means provides said decimated pixels.

5. The apparatus according to claim 1 wherein said frequency component computing means further comprises:

   an address reversing means for providing reversed sequence of a block of said original pixels in upper address reversed order;
   a bit shifting means for shifting each of said transform coefficients by one or more bits to generate a bit-shifted coefficient sequence;
   a pixel selecting means for receiving said original pixels, said reversed sequence, said transform coefficients and bit-shifted coefficient sequence and providing an operation indication sequence, first selected pixel sequence, and second selected pixel sequence; and
   a calculator for receiving said operation indication sequence, said first selected pixel sequence, and second selected pixel sequence; and for computing at least one of sum and difference of each pair of pixel samples, one from said first selected pixel sequence and the other from said second selected pixel sequence, based on said operation indication sequence, to generate said transform coefficients.

6. The apparatus according to claim 1 wherein said frequency component computing means further comprises:

   an address reversing means for providing reversed sequence of a block of said original pixels in lower address reversed order;
   a bit shifting means for shifting each of said transform coefficients by one or more bits to generate a bit-shifted coefficient sequence;
   a pixel selecting means for receiving said original pixels, said reversed sequence, said transform coefficients and bit-shifted coefficient sequence and providing an operation indication sequence, first selected pixel sequence, and second selected pixel sequence; and
   a calculator for receiving said operation indication sequence, said first selected pixel sequence, and second selected pixel sequence; and for computing at least one of sum and difference of each pair of pixel samples, one from said first selected pixel sequence and the other from said second selected pixel sequence, based on said operation indication sequence, to generate said transform coefficients.

7. The apparatus according to claim 1 wherein said coefficient weighting means further comprises:

   a coefficient memory for storing pre-determined constant values;
   a multiplying means, having an input terminal for receiving said transform coefficients, multiplying one of said transform coefficients by one of said pre-determined constant values stored in said coefficient memory; and
   a multiplexer for choosing either the output of said multiplying means or said transform coefficients, based on a coefficient bypass control signal, to provide said weighted transform coefficients.

8. The apparatus according to claim 1 wherein said pixel reconstruction means further comprises:

   a bit shifting means for shifting each of said weighted transform coefficients by one or more bits to generate bit-shifted vector;
   a coefficient selecting means for receiving said weighted transform coefficients, said bit-shifted vector and said filtered pixels and providing an operation indicator vector and two selected coefficient vectors, first selected coefficient vector and second selected coefficient vector; and

a calculator for receiving said operation indicator vector, said first selected coefficient vector, and said second selected coefficient vector; and for computing at least one of sum and difference of each pair of coefficient samples, one chosen from said first selected coefficient vector and the other from said second selected coefficient vector, based on said operation indication vector, to generate said filtered pixels.

9. The apparatus according to claim 1 wherein said frequency component computing means comprises:

a pre-processing means for receiving said original pixels, manipulating them algebraically to provide processed data; and
one or more cascaded arithmetic units having an input terminal and an output terminal.

10. The apparatus according to claim 9 wherein said input terminal of the first cascaded arithmetic unit is coupled to said pre-processing means.

11. The apparatus according to claim 9 where in said input terminal of the $m$th ($m>1$) cascaded arithmetic unit is coupled to the ($m$-1)th cascaded arithmetic unit.

12. The apparatus according to claim 9 wherein said output terminal of the last cascaded arithmetic unit provides said transform coefficients to said coefficient weighting means.

13. The apparatus according to claim 9 wherein said pre-processing means further comprises:

a data address reversing means for providing reversed data set of a block of said original pixels in upper address reversed order;
a data selecting means for receiving said original pixels and said reversed data set and providing an operation indication set, first selected data set and second selected data set; and
a calculator for receiving said operation indication set, said first selected data set and said second selected data set; and for computing sum/difference of each pair of data, one from said first selected data set and the other from said second selected data set, based on said operation indication set to generate said processed data.

14. The apparatus according to claim 9 wherein said pre-processing means further comprises:

a data address reversing means for providing reversed data set of a block of said original pixels in lower address reversed order;
a data selecting means for receiving said original pixels and said reversed data set and providing an operation indication set, first selected data set and second selected data set; and
a calculator for receiving said operation indication set, said first selected data set and said second selected data set; and for computing sum/difference of each pair of data, one from said first selected data set and the other from said second selected data set, based on said operation indication set to generate said processed data.

15. The apparatus according to claim 1 wherein said pixel reconstruction means further comprises one or more cascaded arithmetic units having an input terminal and an output terminal.

16. The apparatus according to claim 15 wherein said input terminal of the first cascaded arithmetic unit is coupled to said coefficient weighting means.

17. The apparatus according to claim 15 where in said input terminal of the $m$th ($m>1$) cascaded arithmetic unit is coupled to the ($m$-1)th cascaded arithmetic unit.

18. The apparatus according to claim 15 wherein said output terminal of the last cascaded arithmetic unit provides said filtered pixels.

19. The apparatus according to claim 9 wherein nth ($n\geq1$) cascaded arithmetic unit comprises:

a shifter for shifting the input data ($r_{n-1}$) by one or more bits to generate bit-shifted data set ($S_n$);
a data selector for receiving said input data ($r_{n-1}$) and said bit-shifted data set ($S_n$) and providing an operation

indication set *(op_n),* first selected data set and second selected data set; and

a calculator for receiving said operation indication set ($op_n$), said first selected data set and said second selected data set; and for adding/subtracting two said selected data sets $(d_{1n}, d_{2n})$, one chosen from said first selected data set and the other from said second selected data set, based on said operation indication set *(op_n)* and providing the output of said cascaded arithmetic unit ($r_n$).

20. The apparatus according to claim 1 wherein said transform kernel indicator (said integer value r) is obtained by the following steps:

   setting $r_{cuur} = 7$ and $r_{past} = 8$;

   computing $rdiffcurr = \left| \dfrac{r_{curr}}{8} - \dfrac{R_t}{R_o} \right|$ and $rdiffpast = \left| \dfrac{r_{past}}{8} - \dfrac{R_t}{R_o} \right|$;

   comparing *rdiffcurr* with *rdiffpast* and outputting "yes" if *rdiffcurr < rdiffpast* and "no" otherwise;
   replacing $r_{past}$ with $r_{cuur}$ and $r_{cuur}$ with $(r_{cuur} - 1)$ if output of said step of comparing is "yes";
   checking if the value of $r_{cuur}$ is 2 and outputting "yes" if $r_{cuur} = 2$ and outputting "no" otherwise;
   assigning said transform kernel indicator (said integer value r) to $r_{curr}$ and outputting said transform kernel indicator;
   jumping to said step of assigning if output of said comparing is "no"; and
   jumping to said step of computing if output of said checking is "no".

21. An apparatus for performing efficient motion compensation for digital video format down-conversion using generalized orthogonal transformation, comprising:

   a syntax parser and variable-length decoding means for decoding video bitstream, having an output terminal for providing decoded motion parameters
   a frame buffer for storing reconstructed low-resolution pictures and having an output terminal for providing low-resolution reference pixels;
   an interpolation means for mapping said low-resolution reference pixels retrieved from said frame buffer into a high-resolution space and providing interpolated pixels for use in inverse motion compensation;
   an inverse motion compensation means for performing motion compensation and having a first input terminal for receiving said interpolated pixels, a second input terminal for receiving decoded motion parameters provided by said syntax parser and variable-length decoding means, and an output terminal for providing high-resolution motion compensated pixels; and
   a decimation means for mapping said high-resolution motion-compensated pixels into a low-resolution space and providing decimated pixels.

22. A method for performing efficient motion compensation for digital video format down-conversion for motion compensation in digital video format down-conversion, comprising:

   computing a frequency component and transforming, upon receiving a block of original pixels, said original pixels into frequency domain and providing transform coefficients;
   weighting a coefficient and multiplying, upon receiving said transform coefficient, each said transform coefficient by one of the pre-determined constant values to generate weighted transform coefficients;
   pixel reconstructing, upon receiving said weighted transform coefficients, and generating filtered pixels which have different resolution from said original pixels,
   generating a decimation/interpolation parameter, upon receiving an original resolution (Ro) and a receiving target resolution (Rt), and deriving a transform kernel indicator (an integer value r), by identifying the integer value r from integer set {2, 3, 4, 5, 6, 7} such that the ratio 8:r is the most close to the resolution ratio Ro:Rt, and providing said transform kernel indicator (said integer value r) and decimation/interpolation parameters;
   receiving said transform kernel indicator (said integer value r) and generating orthogonal transform kernels K1 [r], K2[r] from pre-determined transform kernels K1 and K2. by extracting the first r rows from K1 and first r columns from K2, respectively, **characterized in that** the transform kernels K1 and K2 are provided in accordance with a generalized orthogonal transformation having kernels defined as follows:

$$K_1 = \begin{pmatrix} \alpha & \alpha & \alpha & \alpha & \alpha & \alpha & \alpha & \alpha \\ 5\beta & 4\beta & 3\beta & \beta & -\beta & -3\beta & -4\beta & -5\beta \\ 2\gamma & \gamma & -\gamma & -2\gamma & -2\gamma & -\gamma & \gamma & 2\gamma \\ 4\beta & -\beta & -5\beta & -3\beta & 3\beta & 5\beta & \beta & -4\beta \\ \alpha & -\alpha & -\alpha & \alpha & \alpha & -\alpha & -\alpha & \alpha \\ 3\beta & -5\beta & \beta & 4\beta & -4\beta & -\beta & 5\beta & -3\beta \\ \gamma & -2\gamma & 2\gamma & -\gamma & -\gamma & 2\gamma & -2\gamma & \gamma \end{pmatrix}$$

$$K_2 = \begin{pmatrix} 1 & 5 & 2 & 4 & 1 & 3 & 1 \\ 1 & 4 & 1 & -1 & -1 & -5 & -2 \\ 1 & 3 & -1 & -5 & -1 & 1 & 2 \\ 1 & 1 & -2 & -3 & 1 & 4 & -1 \\ 1 & -1 & -2 & 3 & 1 & -4 & -1 \\ 1 & -3 & -1 & 5 & -1 & -1 & 2 \\ 1 & -4 & 1 & 1 & -1 & 5 & -2 \\ 1 & -5 & 2 & -4 & 1 & -3 & 1 \end{pmatrix}$$

receiving said transform kernel indicator (said integer value r) and selecting orthogonal transform kernels K3[r] and K4[r] from a pool of pre-determined transform kernels K3 and K4 candidates, by choosing the transform kernels defined for resolution ratio 8:r from the pre-determined candidate kernels, **characterized in that** the transform kernels K3 [r] and K4[r] candidates are provided in accordance with a generalized orthogonal transformation having kernels defined as follows:

r = 7

$$K_3[7] = \begin{pmatrix} \sigma_7 & \sigma_7 & \sigma_7 & \sigma_7 & \sigma_7 & \sigma_7 & \sigma_7 \\ 3\mu_7 & 2\mu_7 & \mu_7 & 0 & -\mu_7 & -2\mu_7 & -3\mu_7 \\ 3v_7 & v_7 & -2v_7 & -4v_7 & -2v_7 & v_7 & 3v_7 \\ 2\mu_7 & -\mu_7 & -3\mu_7 & 0 & 3\mu_7 & \mu_7 & -\mu_7 \\ 2v_7 & -3v_7 & -v_7 & 4v_7 & -v_7 & -3v_7 & 2v_7 \\ \mu_7 & -3\mu_7 & 2\mu_7 & 0 & -2\mu_7 & 3\mu_7 & -\mu_7 \\ v_7 & -2v_7 & 3v_7 & -4v_7 & 3v_7 & -2v_7 & v_7 \end{pmatrix}$$

$$K_4[7] = \begin{pmatrix} 1 & 3 & 3 & 2 & 2 & 1 & 1 \\ 1 & 2 & 1 & -1 & -3 & -3 & -2 \\ 1 & 1 & -2 & -3 & -1 & 2 & 3 \\ 1 & 0 & -4 & 0 & 4 & 0 & -4 \\ 1 & -1 & - & 3 & -1 & -2 & 3 \\ 1 & -2 & 1 & 1 & -3 & 3 & -2 \\ 1 & -3 & 3 & -1 & 2 & -1 & 1 \end{pmatrix}$$

<u>r = 6</u>

$$K_3[6] = \begin{pmatrix} \sigma_6 & \sigma_6 & \sigma_6 & \sigma_6 & \sigma_6 & \sigma_6 \\ 4\mu_6 & 3\mu_6 & \mu_6 & -\mu_6 & -3\mu_6 & -4\mu_6 \\ \nu_6 & 0 & -\nu_6 & -\nu_6 & 0 & \nu_6 \\ \sigma_6 & -\sigma_6 & -\sigma_6 & \sigma_6 & \sigma_6 & -\sigma_6 \\ \nu_6 & -2\nu_6 & \nu_6 & \nu_6 & -2\nu_6 & \nu_6 \\ \mu_6 & -3\mu_6 & 4\mu_6 & -4\mu_6 & 3\mu_6 & -\mu_6 \end{pmatrix}$$

$$K_4[6] = \begin{pmatrix} 1 & 4 & 1 & 1 & 1 & 1 \\ 1 & 3 & 0 & -1 & -2 & -3 \\ 1 & 1 & -1 & -1 & 1 & 4 \\ 1 & -1 & -1 & 1 & 1 & -4 \\ 1 & -3 & 0 & 1 & -2 & 3 \\ 1 & -4 & 1 & -1 & 1 & -1 \end{pmatrix}$$

<u>r = 5</u>

$$K_3[5] = \begin{pmatrix} \sigma_5 & \sigma_5 & \sigma_5 & \sigma_5 & \sigma_5 \\ 2\mu_5 & \mu_5 & 0 & -\mu_5 & -2\mu_5 \\ 3\nu_5 & -\nu_5 & -4\nu_5 & -\nu_5 & 3\nu_5 \\ \mu_5 & -2\mu_5 & 0 & 2\mu_5 & -\mu_5 \\ \nu_5 & -3\nu_5 & 4\nu_5 & -3\nu_5 & \nu_5 \end{pmatrix}$$

$$K_4[5] = \begin{pmatrix} 1 & 2 & 3 & 1 & 1 \\ 1 & 1 & -1 & -2 & -3 \\ 1 & 0 & -4 & 0 & 4 \\ 1 & -1 & -1 & 2 & -3 \\ 1 & -2 & 3 & -1 & 1 \end{pmatrix}$$

r = 4

$$K_3[4] = \begin{pmatrix} \sigma_4 & \sigma_4 & \sigma_4 & \sigma_4 \\ 2\mu_4 & \mu_4 & -\mu_4 & -2\mu_4 \\ \sigma_4 & -\sigma_4 & -\sigma_4 & \sigma_4 \\ \mu_4 & -2\mu_4 & 2\mu_4 & -\mu_4 \end{pmatrix}$$

$$K_4[4] = \begin{pmatrix} 1 & 2 & 1 & 1 \\ 1 & 1 & -1 & -2 \\ 1 & -1 & -1 & 2 \\ 1 & -2 & 1 & -1 \end{pmatrix}$$

r = 3

$$K_3[3] = \begin{pmatrix} \sigma_3 & \sigma_3 & \sigma_3 \\ \mu_3 & 0 & -\mu_3 \\ \nu_3 & -2\nu_3 & \nu_3 \end{pmatrix}$$

$$K_4[3] = \begin{pmatrix} 1 & 1 & 1 \\ 1 & 0 & -2 \\ 1 & -1 & 1 \end{pmatrix}$$

r = 2

$$K_3[2] = \begin{pmatrix} \sigma_2 & \sigma_2 \\ \mu_2 & -\mu_2 \end{pmatrix}$$

$$K_4[2] = \begin{pmatrix} 1 & 1 \\ 1 & -1 \end{pmatrix}$$

## Fig.1 PRIOR ART

(KERNEL : $K_0$)

RUN-LENGTH DECODED DCT COEFFICIENTS → LOW-RESOLUTION IDCT OR INVERSE ORTHOGONAL TRANSFORM → Σ → DOWN-CONVERTED VIDEO

(KERNEL : $K_1$、 $K_4$)    (KERNEL : $K_3$、 $K_2$)

LOW-RESOLUTION VIDEO BLOCK(S) RETRIEVED FROM FRAME MEMORY → INTERPOLATION FILTER BASED ON ORTHOGONAL TRANSFORM → FULL-RESOLUTION HALF-PEL MOTION COMPENSATION → DECIMATION FILTER BASED ON ORTHOGONAL TRANSFORM → Σ

DECODED MOTION VECTORS

EP 1 768 421 A2

$$K_1 = \begin{pmatrix} \alpha & \alpha & \alpha & \alpha & \alpha & \alpha & \alpha & \alpha \\ 5\beta & 4\beta & 3\beta & \beta & -\beta & -3\beta & -4\beta & -5\beta \\ 2\gamma & \gamma & -\gamma & -2\gamma & -2\gamma & -\gamma & \gamma & 2\gamma \\ 4\beta & -\beta & -5\beta & -3\beta & 3\beta & 5\beta & \beta & -4\beta \\ \alpha & -\alpha & \alpha & \alpha & \alpha & -\alpha & -\alpha & \alpha \\ 3\beta & -5\beta & \beta & 4\beta & -4\beta & -\beta & 5\beta & -3\beta \\ \gamma & -2\gamma & 2\gamma & -\gamma & -\gamma & 2\gamma & -2\gamma & \gamma \end{pmatrix}$$

$$K_2 = \begin{pmatrix} 1 & 5 & 2 & 4 & 1 & 3 & 1 \\ 1 & 4 & 1 & -1 & -1 & -5 & -2 \\ 1 & 3 & -1 & -5 & -1 & 1 & 2 \\ 1 & 1 & -2 & -3 & 1 & 4 & -1 \\ 1 & -1 & -2 & 3 & 1 & -4 & -1 \\ 1 & -3 & -1 & 5 & -1 & -1 & 2 \\ 1 & -4 & 1 & 1 & -1 & 5 & -2 \\ 1 & -5 & 2 & -4 & 1 & -3 & 1 \end{pmatrix}$$

Fig.2B

$$K_3 = \begin{pmatrix} \sigma_7 & \sigma_7 & \sigma_7 & \sigma_7 & \sigma_7 & \sigma_7 & \sigma_7 \\ 3\mu_7 & 2\mu_7 & \mu_7 & 0 & -\mu_7 & -2\mu_7 & -3\mu_7 \\ 3\nu_7 & \nu_7 & -2\nu_7 & -4\nu_7 & -2\nu_7 & \nu_7 & 3\nu_7 \\ 2\mu_7 & -\mu_7 & -3\mu_7 & 0 & 3\mu_7 & \mu_7 & -\mu_7 \\ 2\nu_7 & -3\nu_7 & -\nu_7 & 4\nu_7 & -\nu_7 & -3\nu_7 & 2\nu_7 \\ \mu_7 & -3\mu_7 & 2\mu_7 & 0 & -2\mu_7 & 3\mu_7 & -\mu_7 \\ \nu_7 & -2\nu_7 & 3\nu_7 & -4\nu_7 & 3\nu_7 & -2\nu_7 & \nu_7 \end{pmatrix}$$

$$K_4 = \begin{pmatrix} 1 & 3 & 3 & 2 & 2 & 1 & 1 \\ 1 & 2 & 1 & -1 & -3 & -3 & -2 \\ 1 & 1 & -2 & -3 & -1 & 2 & 3 \\ 1 & 0 & -4 & 0 & 4 & 0 & -4 \\ 1 & -1 & - & 3 & -1 & -2 & 3 \\ 1 & -2 & 1 & 1 & -3 & 3 & -2 \\ 1 & -3 & 3 & -1 & 2 & -1 & 1 \end{pmatrix}$$

## Fig.2C

$$K_3 = \begin{pmatrix} \sigma_6 & \sigma_6 & \sigma_6 & \sigma_6 & \sigma_6 & \sigma_6 \\ 4\mu_6 & 3\mu_6 & \mu_6 & -\mu_6 & -3\mu_6 & -4\mu_6 \\ \nu_6 & 0 & -\nu_6 & -\nu_6 & 0 & \nu_6 \\ \sigma_6 & -\sigma_6 & -\sigma_6 & \sigma_6 & \sigma_6 & -\sigma_6 \\ \nu_6 & -2\nu_6 & \nu_6 & \nu_6 & -2\nu_6 & \nu_6 \\ \mu_6 & -3\mu_6 & 4\mu_6 & -4\mu_6 & 3\mu_6 & -\mu_6 \end{pmatrix}$$

$$K_4 = \begin{pmatrix} 1 & 4 & 1 & 1 & 1 & 1 \\ 1 & 3 & 0 & -1 & -2 & -3 \\ 1 & 1 & -1 & -1 & 1 & 4 \\ 1 & -1 & -1 & 1 & 1 & -4 \\ 1 & -3 & 0 & 1 & -2 & 3 \\ 1 & -4 & 1 & -1 & 1 & -1 \end{pmatrix}$$

## Fig.2D

$$K_3 = \begin{pmatrix} \sigma_5 & \sigma_5 & \sigma_5 & \sigma_5 & \sigma_5 \\ 2\mu_5 & \mu_5 & 0 & -\mu_5 & -2\mu_5 \\ 3\nu_5 & -\nu_5 & -4\nu_5 & -\nu_5 & 3\nu_5 \\ \mu_5 & -2\mu_5 & 0 & 2\mu_5 & -\mu_5 \\ \nu_5 & -3\nu_5 & 4\nu_5 & -3\nu_5 & \nu_5 \end{pmatrix}$$

$$K_4 = \begin{pmatrix} 1 & 2 & 3 & 1 & 1 \\ 1 & 1 & -1 & -2 & -3 \\ 1 & 0 & -4 & 0 & 4 \\ 1 & -1 & -1 & 2 & -3 \\ 1 & -2 & 3 & -1 & 1 \end{pmatrix}$$

## Fig.2E

$$K_3 = \begin{pmatrix} \sigma_4 & \sigma_4 & \sigma_4 & \sigma_4 \\ 2\mu_4 & \mu_4 & -\mu_4 & -2\mu_4 \\ \sigma_4 & -\sigma_4 & -\sigma_4 & \sigma_4 \\ \mu_4 & -2\mu_4 & 2\mu_4 & -\mu_4 \end{pmatrix}$$

$$K_4 = \begin{pmatrix} 1 & 2 & 1 & 1 \\ 1 & 1 & -1 & -2 \\ 1 & -1 & -1 & 2 \\ 1 & -2 & 1 & -1 \end{pmatrix}$$

## Fig.2F

$$K_3 = \begin{pmatrix} \sigma_3 & \sigma_3 & \sigma_3 \\ \mu_3 & 0 & -\mu_3 \\ \nu_3 & -2\nu_3 & \nu_3 \end{pmatrix}$$

$$K_4 = \begin{pmatrix} 1 & 1 & 1 \\ 1 & 0 & -2 \\ 1 & -1 & 1 \end{pmatrix}$$

## Fig.2G

$$K_3 = \begin{pmatrix} \sigma_2 & \sigma_2 \\ \mu_2 & -\mu_2 \end{pmatrix}$$

$$K_4 = \begin{pmatrix} 1 & 1 \\ 1 & -1 \end{pmatrix}$$

UPSAMPLED PIXELS

*Fig.3A*

<<2  <<1  <<1

α  β  γ

>>1  >>1

DOWN-SAMPLED PIXELS

Fig.3B

EP 1 768 421 A2

# Fig.4

## Fig.5

ORIGINAL PIXELS 301 → FREQUENCY COMPONENT COMPUTING MEANS 300 → TRANSFORM COEFFICIENTS 302 → COEFFICIENT WEIGHTING MEANS 310 → WEIGHTED TRANSFORM COEFFICIENTS 311 → PIXEL RECONSTRUCTION MEANS 320 → FILTERED PIXELS 321

DECIMATION/INTERPOLATION PARAMETERS 331

ORIGINAL RESOLUTION (R₀) 333
TARGET RESOLUTION (Rₜ) 334

DECIMATION/INTERPOLATION PARAMETER GENERATOR 330

TRANSFORM KERNEL INDOCATORR 332

K₁[r] 341  K₂[r] 342  K₃[r] 351  K₄[r] 352

TRANSFORM KERNELS K1 AND K2 GENERATOR 340

TRANSFORM KERNELS K3 AND K4 GENERATOR 350

EP 1 768 421 A2

## Fig.6

## Fig.7

500

```
COEFFICIENT
MEMORY
```

510

TRANSFORM COEFFICIENTS → 
```
MULTIPLYING
MEANS
```

511

520 → MUX → WEIGHTED TRANSFORM COEFFICIENTS

521

522 — COEFFICIENT BYPASS CONTROL SIGNAL

Fig.8

EP 1 768 421 A2

# Fig.9

## Fig.10

EP 1 768 421 A2

Fig.11

34

# Fig.12

COMPUTE

$$rdiffcurr = \left| \frac{r_{curr}}{8} - \frac{R_t}{R_0} \right|$$

$$rdiffpast = \left| \frac{r_{past}}{8} - \frac{R_t}{R_0} \right|$$

$r_{curr}$=7
$r_{past}$=8

rdiffcurr < rdiffpast ?

NO

YES

$r_{past}$=$r_{curr}$
$r_{curr}$=$r_{curr}$−1

$r_{curr}$==2 ?

NO

YES

r=$r_{curr}$

*Fig.13A*

Fig.13B

EP 1 768 421 A2

**REFERENCES CITED IN THE DESCRIPTION**

**Patent documents cited in the description**

- EP 0707426 A
- EP 0786902 A
- JP H11160876 B
- JP 2000350207 A
- US 4768159 A